# EUROPEAN PATENT SPECIFICATION

(11) **EP 3 530 706 B1**
(45) Date of publication and mention of the grant of the patent: **07.12.2022**
(21) Application number: 18382115.6
(22) Date of filing: 27.02.2018
(51) Int. Cl.: C09D 11/037, C09D 11/52, H05K 3/00

(54) **METHOD FOR PRODUCING A CONDUCTIVE INK FOR OFFSET PRINTING AND CONDUCTIVE INK THUS PRODUCED**
VERFAHREN ZUR HERSTELLUNG EINER LEITFÄHIGEN TINTE FÜR OFFSETDRUCK UND SO HERGESTELLTE LEITFÄHIGE TINTE
PROCÉDÉ DE PRODUCTION D'UNE ENCRE CONDUCTRICE POUR IMPRESSION OFFSET ET ENCRE CONDUCTRICE AINSI PRODUITE

(43) Date of publication of application: 28.08.2019
(73) Proprietor: Fundación I + D Automoción y Mecatrónica, 31110 Noain (Navarra) (ES)
(72) Inventor: LOS ARCOS TAPIZ, Saioa, 31110 NOAIN (Navarra) (ES); LASHERAS ZUBIATE, Maria, 31110 NOAIN (Navarra) (ES); ARESTI BARTOLOME, Maite, 31110 NOAIN (Navarra) (ES)
(74) Representative: Ungria López, Javier

(56) References cited:
- EP-A1- 3 203 816
- JP-A- H05 222 326

## Description

### OBJECT OF THE INVENTION

The following invention relates to a method for producing a conductive ink for offset printing and conductive ink thus produced, the method of which is based on adding metal copper particles coated with silver and/or silver particles, both with a size smaller than three microns, to an oily dispersion medium made up of a solvent, an anti-drying agent and a resin, the mixture of which is introduced into a three-cylinder mill for at least 15 minutes until attaining finenesses smaller than 3 microns, for the later printing thereof in an offset machine on paper and the subsequent curing thereof in a tunnel, thus producing conductive imprints.

### BACKGROUND OF THE INVENTION

Offset printing is a mature technology known in the field of the graphics industry. This technique enables the printing of large numbers of copies at a high speed. Likewise, the electronics industry is constantly searching for manufacturing alternatives that entail a differentiating change in the characteristics of the devices, either in the performance or in the cost thereof. Therefore, it is interesting to use conventional printing technologies to manufacture high-performance and low-cost electronic products that can respond to the requirements demanded by the electronics industry.

The manufacturing of electronic products by means of printing is an innovative alternative to non-printable conventional manufacturing methods. This second group includes techniques such as:
- photolithography, which is a long and laborious process.
- PVD or CVD, which generates very pure metal layers, but requires subsequent processes (etching, lift off...) that make the implementation thereof difficult.

With these techniques, high definitions in very small areas are achieved; however, the drawback is that they are limited in large areas and, in general, they are very laborious and expensive and generate waste.

As an alternative, printable manufacturing methods are considered, such as:
- inkjet: formation of the image by means of drops that come out of a head;
- serigraphy: application of the ink via a type of sieve or mesh placed on the substrate;
- offset: indirect printing system; the printing form does not touch the substrate and the ink is transferred via a rubber roller that transmits it to the substrate;
- others (rotogravure, flexography...).

These techniques are applied in order to produce products such as antennas or keyboards, and although the definition is not as good as in microelectronics, the work surface can be increased significantly, with large area printed electronics (OLAE) currently being one of the fields with the greatest potential. These techniques allow for great flexibility, ease of integration, the ability to adapt to very different settings at a lower cost and scalability in large formats.

Producing the printed devices requires the use of functional inks, in other words, inks whose purpose is not purely decorative, but rather confers a number of new properties to the substrate on which they are deposited. The main drawback in the manufacture of printed electronic products is found precisely in these functional materials, since many times they are not available with the characteristics and functionality needed to manufacture the products.

In the case of offset printing, despite being a conventional technique of the graphic arts, the use thereof for manufacturing printed electronics is novel since there is a significant lack of materials suitable for printing electronic products. This means that there are many graphic inks for application by means of offset technology; however, and unlike what occurs in the world of serigraphy, there are hardly any offset inks with electronic functionality. Therefore, the need to develop functional materials for this technique, which do not exist in the market or, if they do exist, are not able to respond to the different products in demand in printed electronics, is identified. Printing electronic devices by means of offset technology is promising given the high speed of the process and the small amount of ink needed for each imprint (the thicknesses of the printed layers by means of offset technology are very small).

Although there are patents that describe conductive inks to apply by means of techniques such as serigraphy or lithography (such as, for example, patent application US20160249460 or international application WO2016151859), the non-existence of commercial inks with electronic functionality that can be applied by means of offset technology is reflected in the lack of patents related to this type of ink. Among the identified patents that describe offset conductive inks based on metals and resins, it is observed that, in two of them, inks based on silver and alkyd resin are described (WO97/48257 and US2006/0260493A1), while in international application WO00/33625, metal particles are used in a modified polyamide. In international applications WO2015/179341 and WO2018/053917, an offset ink with metal particles that require a curing process by means of energy is developed. Patent application US2016249460 also refers to an offset conductive ink with metal particles, in this case, for the application thereof on fabrics.

In addition, document JP05222326 discloses a title ink that contains a resin component comprising at least one resin selected from the group consisting of an alkyd resin, a modified alkyd resin, a modified epoxy resin, a polyurethane oil, rosin and a maleinized oil, a solvent component, metallic silver powder and, if necessary, a flux component.

European patent application EP3203816 refers to a method of manufacturing an electronic circuit board including a substrate and an electronic circuit having a predetermined pattern, the electronic circuit being fixed on the substrate and being made from a nanoink composition containing metal particles.

The present invention refers to producing a conductive ink based on metal particles for offset printing, enabling the production of imprints on paper with suitable conductive characteristics. This ink mainly uses copper particles coated with silver (instead of only pure silver, like in WO97/48257 and US2006/0260493A1) of sizes between 1 and 3 microns (unlike WO97/48257 and WO00/33625), using a modified rosin resin (instead of alkyd, like in WO97/48257 and US2006/0260493A1, or polyamide, like in WO00/33625), which enable high quality printing as well as suitable stability of the ink. Likewise, the developed ink only requires thermal treatment for the curing thereof (unlike the inks developed in international applications WO2015/179341 and WO2018/053917, that require energy curing), which also entails a great advantage for the processing. The substrate on which the ink is applied is paper, unlike in patent application US2016249460, where the developed ink is applied on tissue. Lastly, the process for producing the ink allows for an optimal degree of dispersion of the particles for the offset application thereof. All of this leads to the production of an ink with conductive properties once printed on paper.

### DESCRIPTION OF THE INVENTION.

In the present specification, a method for producing a conductive ink for offset printing and conductive ink thus produced is described, such that the method comprises:
a) the preparation of an oily dispersion medium, in a percentage of 20 to 45% by total weight, formed by the mixture of:
   I. a solvent, (a type of terpineol, geraniol, nerol...), in a percentage of 1 to 4% by total weight;
   II. an anti-drying additive based on hydroquinone, in a percentage of 7 to 17% by total weight; and
   III. a rosin-type resin, in a percentage of 10 to 25% by total weight,
b) adding, to the oily dispersion medium, metal particles with a size smaller than 3 microns, in a percentage of 55 to 80% by total weight, these particles being:
   IV. in a percentage of 55 to 80%,copper particles coated with silver, and
   V. in a percentage of 0 to 25%, silver particles;
c) introducing the assembly into a three-cylinder mill for 15 to 60 minutes, until attaining finenesses smaller than 3 microns.

The method of offset printing using the conductive ink thus produced further comprises:
d) printing with an offset machine on paper;
e) curing the printing made in a tunnel at a temperature between 110 and 150°C and for 2 to 10 minutes, at a speed between 1 m/min (meter/minute) and 5 m/min (meters/minute),
producing conductive imprints.

In a preferred embodiment of the invention, the method comprises:
f) the preparation of an oily dispersion medium, in a percentage of 24% by total weight, formed by the mixture of:
   VI. a solvent in a percentage of 2% by total weight;
   VII. an anti-drying additive, in a percentage of 9% by total weight and
   VIII. a resin, in a percentage of 13% by total weight,
g) adding, to the oily dispersion medium, metal particles with a size smaller than 3 microns, in a percentage of 76% by total weight, these particles being:
   IX. in a percentage of 56%, copper particles coated with silver, and
   X. in a percentage of 20%, silver particles;
h) introducing the assembly into a three-cylinder mill for at least 15 minutes, until attaining finenesses smaller than 3 microns.

The method of offset printing using the conductive ink thus produced further comprises:
i) printing with an offset machine on paper;
j) curing the printing made in a tunnel at a temperature of 130°C and for 3 minutes, at a speed of 2 m/min (meter/minute), producing conductive imprints.

The resin preferably comprises a modified rosin resin, vegetable oil and mineral oil.

According to the method described, a conductive ink is produced that has a composition of:
A. a solvent in a percentage of 1 to 4% by total weight;
B. an anti-drying additive in a percentage of 7 to 17% by total weight;
C. a resin in a percentage of 10 to 25% by total weight;
D. copper particles coated with silver, of a size smaller than 3 microns, in a percentage of 55 to 80% by total weight, and
E. silver particles, of a size smaller than 3 microns, in a percentage of 0 to 25% by total weight.

In a preferred embodiment of the invention, the ink has a composition of:
F. a solvent in a percentage of 2% by total weight;
G. a resin in a percentage of 13% by total weight;
H. an anti-drying additive in a percentage of 9% by total weight;
I. copper particles coated with silver, of a size smaller than 3 microns, in a percentage of 56% by total weight, and
J. silver particles, of a size smaller than 3 microns, in a percentage of 20% by total weight,
the conductive ink thus produced having a viscosity between 65 and 80 Pa.s (Pascal-seconds) and rheological behavior suitable for offset printing, since the ink is quickly distributed in the printing rollers, is compatible with the fountain solutions and is not pulled when printing occurs.

To complete the description provided below, and for the purpose of helping to make the characteristics of the invention more readily understandable, the present specification is accompanied by a figure representing the most characteristic details of the invention.

### BRIEF DESCRIPTION OF THE FIGURE

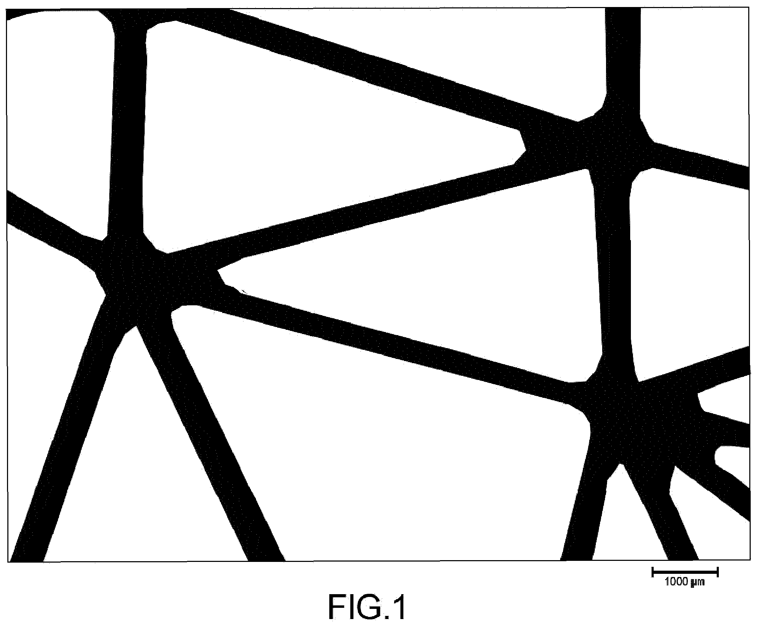

Figure 1 shows a view of the conductive printing produced by means of offset printing with the ink object of the invention, being able to observe the perfect definition thereof.

### DETAILED DESCRIPTION OF THE INVENTION

In the present specification, a method for producing a conductive ink for offset printing and conductive ink thus produced is presented, such that the method comprises the preparation of an oily dispersion medium, in a percentage of 20 to 45% by total weight, formed by the mixture of a solvent (a type of terpineol, geraniol, nerol...), in a percentage of 1 to 4% by total weight; an anti-drying additive based on hydroquinone, in a percentage of 7 to 17% by total weight and a rosin-type resin, in a percentage of 10 to 25% by total weight.

Metal particles with a size smaller than 3 microns are added to said oily dispersion medium in a percentage of 55 to 80% by total weight, these particles being, in a percentage of 55 to 80%,copper particles coated with silver, and in a percentage of 0 to 25%, silver particles.

The mixture produced is introduced into a three-cylinder mill for 15 to 60 minutes, until attaining finenesses smaller than 3 microns, in order to then proceed to the printing of the ink with an offset machine on paper and finally curing the imprint in a tunnel at a temperature between 110 and 150°C for 2 to 10 minutes, at a speed between 1 m/min (meter/minute) and 5 m/min (meters/minute), producing conductive imprints.

According to the method described, a conductive ink is produced that has a composition of: a solvent, in a percentage of 1 to 4% by total weight; an anti-drying additive, in a percentage of 7 to 17% by total weight; a resin, in a percentage of 10 to 25% by total weight; copper particles coated with silver, of a size smaller than 3 microns, in a percentage of 55 to 80% by total weight, and silver particles, of a size smaller than 3 microns, in a percentage of 0 to 25% by total weight.

The conductive ink thus produced has a viscosity between 65 and 80 Pa.s (Pascal-seconds) and rheological behavior suitable for offset printing, since the ink is quickly distributed in the printing rollers, it is compatible with the fountain solutions, it is not pulled when printing occurs and by means of said ink a perfect definition is produced in the offset printing.

### EXAMPLE 1

50 g of the following were prepared:
- copper particles coated with silver with a size smaller than 3 microns, in a percentage of 56% by total weight,
- silver particles with a size smaller than 3 microns, in a percentage of 20% by total weight,
- a modified Lawter rosin resin in a percentage of 13% by total weight,
- a Sigma Aldrich terpene alcohol-type solvent in a percentage of 2% by total weight,
- an anti-drying additive based on Huber hydroquinone in a percentage of 9% by total weight.

First, the resin was mixed with the terpene-type solvent and afterwards, the number of particles indicated for ensuring good homogeneity and dispersion thereof was progressively added by means of manual stirring.

The mixture, prepared in this way, was introduced into a Torrey Hills brand three-cylinder mill, where grinding was carried out with ceramic rollers for 30 minutes. The grinding speed was between 50 and 100 rpm in the slow roller, between 100 and 200 rpm in the intermediate roller and between 200 and 400 rpm in the fast roller. The space between cylinders was set at 0.7 mm. At the end of the indicated time, the ink produced was collected at the outlet of the rollers.

Next, the fineness of the grinding was determined by means of a grindometer, to check that the values were under 3 microns. The rheology of the ink was also evaluated and a viscosity of 70 Pa.s was produced. Imprints were also made by means of an IGT printing tester, the pulling of the process and the drying speed in the rollers being evaluated. Likewise, the final aspect of the imprint on paper before and after a curing process at 130°C for 30 minutes was evaluated.

With the formulated ink, imprints on paper of 350 g/m² (grams per square meter) in an industrial offset machine were made. These imprints were cured in a curing tunnel for 3 minutes at a speed of 2.1 m/min and a temperature of 130°C. The printed paper showed high definition of the design to be printed and a high resolution.

Measurements of conductivity were made on the printed ink, obtaining values of 4.3 ohms on a surface of 5cm x 5cm.

### EXAMPLE 2

50 g of the following were prepared:
C&S Corporation copper particles coated with silver with a size smaller than 3 microns in a percentage of 76% by total weight,
a resin based on a modified Lawter rosin resin in a percentage of 13% by total weight,
a Sigma Aldrich alcohol terpene-type solvent in a percentage of 2% by total weight,an anti-drying additive based on Huber hydroquinone in a percentage of 9% by total weight.

First, the resin was mixed with the terpene-type solvent and afterwards, the number of particles indicated for ensuring good homogeneity and dispersion thereof was progressively added by means of manual stirring.

The mixture, prepared in this way, was introduced into a Torrey Hills brand three-cylinder mill, where grinding was carried out with ceramic rollers for 30 minutes. The grinding speed was between 50 and 100 rpm in the slow roller, between 100 and 200 rpm in the intermediate roller and between 200 and 400 rpm in the fast roller. The space between cylinders was set at 0.7 mm. At the end of the indicated time, the ink produced was collected at the outlet of the rollers.

Next, the fineness of the grinding was determined by means of a grindometer, to check that the values were under 3 microns. The rheology of the ink was also evaluated and a viscosity of 74 Pa.s was produced. Imprints were also made by means of an IGT printing tester, the pulling of the process and the drying speed in the rollers being evaluated. Likewise, the final aspect of the imprint on paper before and after a curing process at 130°C for 30 minutes was evaluated.

With the formulated ink, imprints on glossy paper of 350 g/m² (grams per square meter) in an industrial offset machine were made. These imprints were cured in a curing tunnel for 3 minutes at a speed of 2.1 m/min and a temperature of 130°C. The constituted film showed high definition of the design to be printed and high resolutions.

Measurements of conductivity were made on the printed layer, obtaining values of 19 ohms on a surface of 5cm x 5cm.

## Claims

1. A method for producing a conductive ink for offset printing, **characterized in that** the method comprises:
a) the preparation of an oily dispersion medium, in a percentage of 20 to 45% by total weight, formed by the mixture of:
I. a solvent, in a percentage of 1 to 4% by total weight;
II. an anti-drying additive, in a percentage of 7 to 17% by total weight, and
III. a resin, in a percentage of 10 to 25% by total weight;
b) adding, to the oily dispersion medium, metal particles with a size smaller than 3 microns, in a percentage of 55 to 80% by total weight, these particles being:
IV. in a percentage of 55 to 80%, copper particles coated with silver, and
V. in a percentage of 0 to 25%, silver particles;
c) introducing the assembly into a three-cylinder mill for 15 to 60 minutes, until attaining finenesses smaller than 3 microns.

2. The method for producing a conductive ink for offset printing according to claim 1, **wherein** the percentage of the oily dispersion medium is of 24% by total weight and it comprises: 2% by total weight of the solvent; 9% by total weight of the anti-drying additive, and 13% by total weight of the resin;
and wherein the metal particles are added to the oily dispersion medium in a percentage of 76% by total weight, these particles being:
VI. copper particles coated with silver in a percentage of 56%, and
VII. silver particles in a percentage of 20%.

3. The method for producing a conductive ink for offset printing according to claim 1 or 2, **wherein** the resin comprises a modified rosin resin, vegetable oil and mineral oil.

4. A conductive ink produced according to the method of claim 1, **characterized in that** the ink has a composition of:
A. a solvent in a percentage of 1 to 4% by total weight;
B. a resin in a percentage of 10 to 25% by total weight;
C. an anti-drying additive in a percentage of 7 to 17% by total weight;
D. copper particles coated with silver, of a size smaller than 3 microns, in a percentage of 55 to 80% by total weight, and
E. silver particles, of a size smaller than 3 microns, in a percentage of 0 to 25% by total weight.

5. Use of an ink according to claim 4 in a method of offset printing, **characterized in that** it comprises:
a) printing on paper with an offset machine;
b) curing the printing obtained in step (a) in a tunnel for 2 to 10 minutes at a temperature between 110 and 150°C and at a speed between 1 and 5 m/min, producing conductive tracks.

## Patentansprüche

1. Verfahren zum Herstellen einer leitfähigen Druckfarbe für Offset-Druck, **dadurch gekennzeichnet, dass** das Verfahren umfasst:
a) Zubereiten eines ölhaltigen Dispersionsmittels in einem Prozentsatz von 20 bis 45 % bezogen auf das Gesamtgewicht, das aus der Mischung aus:
I. einem Lösungsmittel in einem Prozentsatz von 1 bis 4 % bezogen auf das Gesamtgewicht;
II. einem trocknungsverzögernden Zusatzstoff in einem Prozentsatz von 7 bis 17 % bezogen auf das Gesamtgewicht, und
III. einem Harz in einem Prozentsatz von 10 bis 25 % bezogen auf das Gesamtgewicht gebildet ist;
b) Hinzufügen zu dem ölhaltigen Dispersionsmittel von Metallpartikeln mit einer Größe, die kleiner als 3 Mikrometer ist, in einem Prozentsatz von 55 bis 80 % bezogen auf das Gesamtgewicht, wobei diese Partikel:
IV. in einem Prozentsatz von 55 bis 80 % mit Silber beschichtete Kupferpartikel und
V. in einem Prozentsatz von 0 bis 25 % Silberpartikel sind;
c) 15 bis 60 Minuten langes Einbringen der Zusammenstellung in eine Dreiwalzenmühle, bis Feinheiten von weniger als 3 Mikrometer erreicht sind.

2. Verfahren zum Herstellen einer leitfähigen Druckfarbe für Offset-Druck nach Anspruch 1, wobei der Prozentsatz des ölhaltigen Dispersionsmittels 24 % bezogen auf das Gesamtgewicht ist und umfasst: 2 % bezogen auf das Gesamtgewicht des Lösungsmittels; 9 % bezogen auf das Gesamtgewicht des trocknungsverzögernden Zusatzstoffes, und 13 % bezogen auf das Gesamtgewicht des Harzes;
und wobei die Metallpartikel zu dem ölhaltigen Dispersionsmittel in einem Prozentsatz von 76 % bezogen auf das Gesamtgewicht hinzugefügt werden, wobei diese Partikel:
VI. mit Silber beschichtete Kupferpartikel in einem Prozentsatz von 56 %, und
VII. Silberpartikel in einem Prozentsatz von 20 % sind.

3. Verfahren zum Herstellen einer leitfähigen Druckfarbe für Offset-Druck nach Anspruch 1 oder 2, wobei das Harz ein modifiziertes Kolophoniumharz, Pflanzenöl und Mineralöl umfasst.

4. Leitfähige Druckfarbe, die gemäß dem Verfahren nach Anspruch 1 hergestellt wird, **dadurch gekennzeichnet, dass** die Druckfarbe folgende Zusammensetzung aufweist:
A. ein Lösungsmittel in einem Prozentsatz von 1 bis 4 % bezogen auf das Gesamtgewicht;
B. ein Harz in einem Prozentsatz von 10 bis 25 % bezogen auf das Gesamtgewicht;
C. einen trocknungsverzögernden Zusatzstoff in einem Prozentsatz von 7 bis 17 % bezogen auf das Gesamtgewicht;
D. mit Silber beschichtete Kupferpartikel einer Größe, die kleiner als 3 Mikrometer ist, in einem Prozentsatz von 55 bis 80 % bezogen auf das Gesamtgewicht, und
E. Silberpartikel einer Größe, die kleiner als 3 Mikrometer ist, in einem Prozentsatz von 0 bis 25 % bezogen auf das Gesamtgewicht.

5. Verwendung einer Druckfarbe nach Anspruch 4 in einem Offset-Druckverfahren, **dadurch gekennzeichnet, dass** sie umfasst:
a) Drucken auf Papier mit einer Offset-Maschine;
b) 2 bis 10 Minuten langes Trocknen des Ausdrucks, der in Schritt a) erzielt wird, in einem Tunnel bei einer Temperatur zwischen 110 und 150°C und mit einer Geschwindigkeit zwischen 1 und 5 m/min, wodurch leitfähige Spuren hergestellt werden.

## Revendications

1. Procédé de production d'une encre conductrice pour une impression offset,
**caractérisé en ce que** le procédé comprend :
a) la préparation d'un milieu de dispersion huileuse, à un pourcentage de 20 à 45 % en poids total, formé par le mélange de :
I. un solvant, à un pourcentage de 1 à 4 % en poids total ;
II. un additif antisiccatif, à un pourcentage de 7 à 17 % en poids total, et
III. une résine, à un pourcentage de 10 à 25 % en poids total ;
b) l'ajout, au milieu de dispersion huileuse, de particules métalliques ayant une taille inférieure à 3 microns, à un pourcentage de 55 à 80 % en poids total, ces particules étant :
IV. à un pourcentage de 55 à 80 %, des particules de cuivre revêtues d'argent, et
V. à un pourcentage de 0 à 25 %, des particules d'argent ;
c) l'introduction de l'ensemble dans un broyeur à trois cylindres pendant 15 à 60 minutes, jusqu'à atteindre des finesses inférieures à 3 microns.

2. Procédé de production d'une encre conductrice pour une impression offset selon la revendication 1, dans lequel le pourcentage du milieu de dispersion huileuse est de 24 % en poids total et il comprend : 2 % en poids total du solvant ; 9 % en poids total de l'additif antisiccatif et 13 % en poids total de la résine ;
et dans lequel les particules métalliques sont ajoutées au milieu de dispersion huileuse à un pourcentage de 76 % en poids total, ces particules étant :
VI. des particules de cuivre revêtues d'argent à un pourcentage de 56 %, et
VII. des particules d'argent à un pourcentage de 20 %.

3. Procédé de production d'une encre conductrice pour une impression offset selon la revendication 1 ou 2, dans lequel la résine comprend une résine de colophane modifiée, de l'huile végétale et de l'huile minérale.

4. Encre conductrice produite selon le procédé de la revendication 1, **caractérisée en ce que** l'encre a une composition de :
A. un solvant à un pourcentage de 1 à 4 % en poids total ;
B. une résine à un pourcentage de 10 à 25 % en poids total ;
C. un additif antisiccatif à un pourcentage de 7 à 17 % en poids total ;
D. des particules de cuivre revêtues d'argent, ayant une taille inférieure à 3 microns, à un pourcentage de 55 à 80 % en poids total, et
E. des particules d'argent, ayant une taille inférieure à 3 microns, à un pourcentage de 0 à 25 % en poids total.

5. Utilisation d'une encre selon la revendication 4 dans un procédé d'impression offset, **caractérisé en ce qu'**il comprend :
a) l'impression sur du papier à l'aide d'une machine offset ;
b) le durcissement de l'impression obtenue à l'étape (a) dans un tunnel pendant 2 à 10 minutes à une température entre 110 et 150 °C et à une vitesse entre 1 et 5 m/min, produisant ainsi des pistes conductrices.
